# EUROPÄISCHE PATENTSCHRIFT

(11) **EP 1 877 967 B1**
(45) Veröffentlichungstag und Bekanntmachung des Hinweises auf die Patenterteilung: **14.05.2014**
(21) Anmeldenummer: 06791507.4
(22) Anmeldetag: 28.04.2006
(51) Int. Cl.: G06K 19/073, G06K 19/077

(54) **VERFAHREN ZUR HERSTELLUNG EINES TRAGBAREN DATENTRÄGERS**
METHOD FOR PRODUCING A PORTABLE DATA CARRIER
PROCÉDÉ DE FABRICATION D'UN SUPPORT DE DONNÉES PORTABLE

(30) Priorität: 29.04.2005 DE 102005020092
(43) Veröffentlichungstag der Anmeldung: 16.01.2008
(73) Patentinhaber: Giesecke & Devrient GmbH, 81667 München (DE)
(72) Erfinder: SCHRÖDER, Sönke, 81541 München (DE); JANSEN, Jens, 81825 München (DE)
(86) Internationale Anmeldenummer: PCT/EP2006/003988
(87) Internationale Veröffentlichungsnummer: WO 2006/136229

(56) Entgegenhaltungen:
- EP-A- 1 411 466
- WO-A-2005/062245
- DE-A1- 10 343 734
- DE-A1- 19 645 083
- FR-A- 2 757 313
- US-A- 4 786 791

## Beschreibung

Die Erfindung betrifft ein Verfahren zur Herstellung eines tragbaren Datenträgers. Weiterhin betrifft die Erfindung einen tragbaren Datenträger.

Im Rahmen des Herstellungsprozesses für einen tragbaren Datenträger besteht eine übliche Vorgehensweise darin, eine elektronische Schaltung ganz oder teilweise mit einem Material, insbesondere mit einem Kunststoffmaterial zu umgeben. Bei der elektronischen Schaltung handelt es sich in der Regel um einen integrierten Schaltkreis, insbesondere um einen Mikrocontroller. Je nach dem Anwendungsgebiet, für das die tragbaren Datenträger vorgesehen sind, werden die tragbaren Datenträger jeweils zusätzlich zur elektronischen Schaltung mit weiteren Komponenten ausgestattet, insbesondere auch mit einem oder mehreren Schalteinrichtungen. Aufgrund ihrer flachen Bauweise und der niedrigen Herstellungskosten eignen sich für diesen Zweck Folientaster besonders gut.

Es ist bereits bekannt, zur Herstellung eines Folientasters einzelne Folienlagen, zwischen denen ein Schaltkontakt realisiert werden soll, übereinander zu schichten und kalt miteinander zu verkleben. Dabei wird zwischen zwei elektrisch leitende Schaltfolien eine gelochte und elektrisch isolierende Zwischenfolie angeordnet, die als Abstandshalter dient und verhindert, dass sich die Schaltfolien im Ruhezustand des Folientasters berühren. Die Zwischenfolie bewirkt somit, dass der Folientaster im Ruhezustand geöffnet ist. Durch Ausübung eines Drucks auf wenigstens eine der beiden Schaltfolien im Bereich der Lochung der Zwischenfolie wird die Schaltfolie deformiert und ein elektrischer Kontakt zwischen den beiden Schaltfolien hergestellt. Infolge ihrer Elastizität nimmt die Schaltfolie wieder ihre ursprüngliche Form an, sobald der Druck nicht mehr vorhanden ist. Dadurch wird der elektrische Kontakt zwischen den beiden Schaltfolien wieder unterbrochen. Der Folientaster ist somit nur während der Ausübung eines Drucks auf wenigstens eine der beiden Schaltfolien geschlossen.

Der bekannte Folientaster kann vielfältig eingesetzt werden und hat sich gut bewährt. Allerdings ist die bekannte Vorgehensweise bei der Herstellung des Folientasters beispielsweise dann nicht anwendbar, wenn die Folien durch Heißlamination miteinander verbunden werden sollen, da die bei der Heißlamination auftretende Materialerweichung dazu führen würde, dass die Lochung der Zwischenfolie ausgefüllt würde und dadurch die Funktion des Folientasters beeinträchtigt wäre. Die Heißlamination wird aber gerade bei der Herstellung von tragbaren Datenträgern, insbesondere von Chipkarten, häufig eingesetzt, da sich damit eine untrennbare Verbindung der bei der Herstellung verwendeten Folien erzielen lässt. Zwar ist es auch möglich, tragbare Datenträger mittels Kaltverklebung herzustellen und dadurch eine Kompatibilität mit der bekannten Herstellungsweise des Folientasters zu erreichen. Allerdings lässt sich die durch die Heißlamination realisierte Untrennbarkeit der einzelnen Folien durch Kaltverklebung nicht erreichen.

DE 103 43 734 A1, EP 1411 466 A1 und US 4,786,791 zeigen jeweils eine Chipkarte mit Schalteinrichtung. In DE 196 45 083 A1 wird nach der Herstellung eines Kartenkörpers eine zweistufige Kavität für den Chip in den Kartenkörper gefräst. Zwischen den Chip und die freigelegten Kontakte einer Spule wird eine druckempfindlich-leitende Gummimatte als Schaltelement eingefügt.

Der nächstliegende Stand der Technik DE 197 42 126 zeigt einen tragbaren Datenträger mit Aktivierungsschalter.

Der Erfindung liegt die Aufgabe zugrunde, die Herstellung eines tragbaren Datenträgers mit wenigstens einer Schalteinrichtung möglichst optimal zu gestalten und insbesondere auch den Einsatz von materialerweichenden Fertigungstechniken zur Herstellung des tragbaren Datenträgers zu ermöglichen. Diese Aufgabe wird durch ein Herstellungsverfahren mit der Merkmalskombination des Anspruchs 1 gelöst.

Das erfindungsgemäße Verfahren bezieht sich auf die Herstellung eines tragbaren Datenträgers gemäß Anspruch 1.

Die Ausgestaltung hat den Vorteil, dass ein in Heißlamination hergestellter tragbarer Datenträger mit einer kostengünstigen und sehr flach bauenden Schalteinrichtung ausgerüstet wird. Durch die Heißlamination sind die Kunststoffteile, aus denen der tragbare Datenträger besteht, untrennbar miteinander verbunden. Ein weiterer Vorteil der Heißlamination besteht darin, dass eine qualitativ hochwertige Oberfläche des Körpers ausgebildet werden kann.

Die Schalteinrichtung wird vorzugsweise als ein mechanischer Taster ausgebildet, da bei tragbaren Datenträgern insbesondere ein Bedarf an Tastern besteht.

Bei der Ausbildung der Kavität kann wenigstens ein elektrisch leitender Bereich freigelegt, der mit der elektronischen Schaltung verbunden ist. Dadurch können ohne zusätzlichen Aufwand Vorbereitungen zum Anschließen der Schalteinrichtung an die elektronische Schaltung getroffen werden. Weiter werden im Bereich der Kavität Schaltkontakte freigelegt oder ausgebildet. Auf Basis dieser Schaltkontakte kann dann die Schalteinrichtung hergestellt werden.

Bei einer vorteilhaften Ausgestaltung des erfindungsgemäßen Verfahrens wird innerhalb der Kavität ein elastisch deformierbares Element angeordnet. Dieses Element kann beispielsweise dazu dienen eine taktile Rückmeldung beim Betätigen der Schalteinrichtung zu erzeugen. Beispielsweise um ein Verrutschen des elastisch deformierbaren Elements zu verhindern, kann das elastisch deformierbare Element in die Kavität eingeklebt werden.

Die Kavität wird vorzugsweise mit einem Deckel verschlossen. Insbesondere wird der Deckel elastisch deformierbar ausgebildet. Auf diese Weise wird eine Betätigung der Schalteinrichtung mit Hilfe des Deckels ermöglicht. Dabei ist es besonders vorteilhaft, wenn die Geometrie der Kavität so gewählt wird, dass die Schaltkontakte durch eine elastische Deformation des Deckels elektrisch miteinander verbunden werden können. Dadurch lässt sich eine sehr einfach gestaltete und kompakte Schalteinrichtung herstellen. Wenn die Unterseite des Deckels elektrisch leitend ausgelegt wird, kann der Taster ohne taktiles Element ausgeführt sein.

Besonders effizient lässt sich das erfindungsgemäße Verfahren gestalten, wenn das elastisch deformierbare Element und/oder der Deckel einem flachstückartigen Halbzeug entnommen werden. Dabei besteht zudem die Möglichkeit, einen Verfahrensschritt dadurch einzusparen, dass das elastisch deformierbare Element und der Deckel in Form einer dauerhaft miteinander verbundenen Einheit verarbeitet werden. Eine separate Handhabung des elastisch deformierbaren Elements und des Deckels entfällt somit.

Bei einer Variante des erfindungsgemäßen Verfahrens wird eine Vielzahl von Kavitäten in den Körper eingearbeitet. In diesem Fall ist es im Hinblick auf eine effiziente Herstellung von Vorteil, wenn mehrere Kavitäten durch einen gemeinsamen Deckel verschlossen werden.

Ist die elektronische Schaltung nicht durch eine berührende Kontaktierung von außerhalb des tragbaren Datentragers zugänglich, wird der tragbare Datenträger vorzugsweise mit einer Rücksetzeinrichtung ausgerüstet, die von außerhalb des tragbaren Datenträgers betätigbar ist und mit deren Hilfe eine Überführung der elektronischen Schaltung in einen definierten Zustand auslösbar ist. Dieser weitere Aspekt der Erfindung birgt den Vorteil, dass der tragbare Datenträger nicht unbrauchbar wird, wenn die elektronische Schaltung in einen undefinierten Zustand versetzt wird. Dabei können der Aufbau des tragbaren Datenträgers und der Herstellungsprozess weitgehend beibehalten werden. Es ist lediglich erforderlich, den tragbaren Datenträger mit der Rücksetzeinrichtung auszurüsten.

Die Schalteinrichtung ist vorzugsweise als ein mechanischer Taster ausgebildet. Innerhalb der Kavität kann ein elastisch deformierbares Element angeordnet sein und die Kavität kann mit einem elastisch deformierbaren Deckel verschlossen sein.

Bei einer Variante ist die Schalteinrichtung des tragbaren Datenträgers so ausgebildet, dass sie durch Deformation des tragbaren Datenträgers betätigbar ist. Dies ermöglicht eine Betätigung der Schalteinrichtung über die Handhabung des tragbaren Datenträgers. Weiterhin kann der erfindungsgemäße tragbare Datenträger so ausgebildet sein, dass die Position der Schalteinrichtung von außerhalb des tragbaren Datenträgers nicht erkennbar ist. Dies ist beispielsweise dann von Vorteil, wenn eine Betätigung durch den Inhaber des tragbaren Datenträgers möglichst unterbleiben soll. Zudem besteht die Möglichkeit, dass die Schalteinrichtung mehrere Betätigungsmodi aufweist. Dies hat den Vorteil, dass mit derselben Schalteinrichtung unterschiedliche Ereignisse auslösbar sind. Die Betätigungsmodi können beispielsweise über die Stärke der Betätigung auswählbar sein. Ebenso ist es aber auch möglich, dass mehrere Schalteinrichtungen vorgesehen sind.

Der tragbare Datenträger kann so ausgebildet sein, dass die elektronische Schaltung nicht durch eine berührende Kontaktierung von außerhalb des tragbaren Datenträgers zugänglich ist. In diesem Fall ist es von Vorteil, wenn eine von außerhalb des tragbaren Datenträgers betätigbare Rücksetzeinrichtung zur Überführung der elektronischen Schaltung in einen definierten Zustand vorgesehen ist. Beispielsweise kann die Schalteinrichtung als Rücksetzeinrichtung vorgesehen sein. Ebenso besteht die Möglichkeit, dass eine weitere elektronische Schaltung als Rücksetzeinrichtung vorgesehen ist. Dies ist insbesondere dann von Vorteil, wenn die weitere elektronische Schaltung ohnehin vorhanden ist.

Der erfindungsgemäße tragbarer Datenträger ist vorzugsweise als eine Chipkarte ausgebildet.

Schließlich betrifft eine Ausgestaltung ein flachstuckartiges Halbzeug zur Herstellung der Schalteinrichtungen der erfindungsgemäßen Datenträger. Das Halbzeug zeichnet sich dadurch aus, dass es eine Vielzahl von elastisch deformierbaren Elementen zum Einsetzen in die Kavitäten der tragbaren Datenträger und/oder eine Vielzahl von Deckeln zum Verschließen der Kavitäten aufweist.

Das Halbzeug hat den Vorteil, dass es eine effiziente Zuführung der für die Herstellung der Schalteinrichtungen benötigten Komponenten ermöglicht.

Vorzugsweise ist das Halbzeug als ein Band ausgebildet. Bei einem Ausführungsbeispiel ist das Halbzeug als ein Metallband ausgebildet, das eine Vielzahl vorgefertigter, noch miteinander verbundener elastisch deformierbarer Elemente als integrale Bestandteile des Metallbands aufweist. Dies hat den Vorteil, dass kein zusätzliches Trägermaterial benötigt wird. Die elastisch deformierbaren Elemente können beispielsweise durch Ausstanzen aus dem Metallband vereinzelt werden.

Ebenso ist es aber auch möglich, dass das Halbzeug als ein Trägerband ausgebildet ist, auf das die elastisch deformierbaren Elemente abziehbar aufgeklebt sind. Insbesondere können die elastisch deformierbaren Elemente mittels Klebeelementen, die der Fixierung der elastisch deformierbaren Elemente in den Kavitäten dienen, auf das Trägerband aufgeklebt sein. Dadurch vereinfacht sich die Herstellung und es verringert sich das Risiko, fehlerhafte Schalteinrichtungen zu produzieren.

Außerdem kann das Halbzeug als ein Kunststoffband zum Ausstanzen der Deckel ausgebildet sein. Dabei ist es besonders vorteilhaft, wenn auf dem Kunststoffband eine Vielzahl von elastisch deformierbaren Elementen angeordnet ist, die dauerhaft mit dem Kunststoffband verbunden sind. Dies ermöglicht es, die Deckel und die elastisch deformierbaren Elemente nach der Ausstanzung aus dem Kunststoffband jeweils als eine Einheit zu handhaben.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Es zeigen:
- Fig. 1: eine Chipkarte in einer schematischen Schnittdarstellung,
- Fig. 2: die in Fig. 1 dargestellte Chipkarte in einer schematischen Aufsicht,
- Fig. 3: eine Variante der Chipkarte mit einem ersten, erfindungsgemäßen Ausführungsbeispiel des Tasters in einer schematischen Schnittdarstellung,
- Fig. 4: das erste Ausführungsbeispiel des Tasters in einer schematischen Ansicht von unten,
- Fig. 5: eine weitere Variante der Chipkarte mit einem, nicht erfindungsgemäßen zweiten Ausfüh-Chipkarte rungsbeispiel des Tasters in einer Fig. 3 entsprechenden Darstellung,
- Fig. 6: das zweite Ausführungsbeispiel des Tasters in einer Fig. 4 entsprechen Darstellung,
- Fig. 7: die in Fig. 3 dargestellte Variante der Chipkarte mit einem dritten, erfindungsgemäßen Ausführungsbeispiel des Tasters in einer Fig. 3 entsprechenden Darstellung,
- Fig. 8: das dritte Ausführungsbeispiel des Tasters in einer Fig. 4 entsprechen Darstellung,
- Fig. 9: die in Fig. 5 dargestellte Variante der Chipkarte mit einem vierten, nicht erfindungsgemäßen Ausführungsbeispiel des Tasters in einer Fig. 3 entsprechenden Darstellung,
- Fig. 10: das vierte Ausführungsbeispiel des Tasters in einer Fig. 4 entsprechen Darstellung,
- Fig. 11: ein Ausführungsbeispiel für ein Metallband mit vorgefertigten Schnappscheiben in einer schematischen Aufsicht,
- Fig. 12: ein Ausführungsbeispiel für ein Kunststoffband, das mit dem Design der Deckel bedruckt ist, in einer schematischen Aufsicht,
- Fig. 13: eine Schnappscheibe eines weiteren Ausführungsbeispiels des Metallbands in einer schematischen Schnittdarstellung,
- Fig. 14: ein Ausführungsbeispiel für ein Trägerband, das mit Schnappscheiben bestückt ist, in einer schematischen Aufsicht,
- Fig. 15: ein Ausführungsbeispiel für ein Kunststoffband, das mit Schnappscheiben bestückt ist, in einer schematischen Aufsicht
- Fig. 16: eine schematischen Schnittdarstellung des Ausführungsbeispiels aus Fig. 15,
- Fig. 17: ein nicht erfindungsgemäßes Ausführungsbeispiel für die drei Herstellungsstufen eines piezoelektrischen Tasters in einer schematischen Aufsicht, und
- Fig. 18: eine schematische Schnittdarstellung des piezoelektrischen Tasters aus Fig.17, der in eine Chipkarte eingebaut ist.

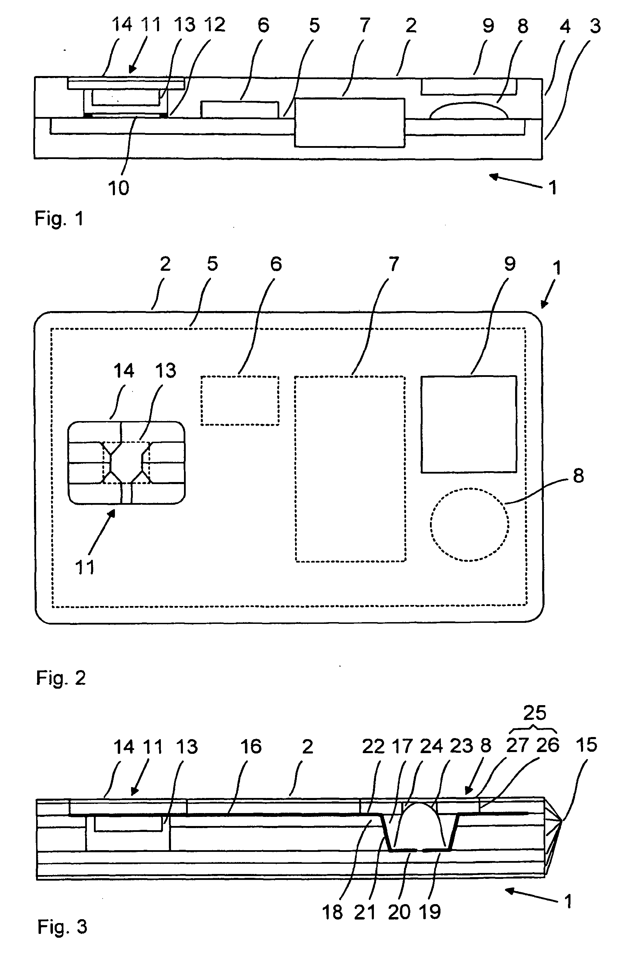

Fig.1 zeigt eine Chipkarte 1 in einer schematischen Schnittdarstellung. Die Darstellung ist nicht streng auf eine Schnittebene begrenzt, sondern zeigt auch gegeneinander versetzt angeordnete Komponenten der Chipkarte 1. Es wurde daher auf die Verwendung von Schraffuren verzichtet. Aus Gründen der Anschaulichkeit ist die Darstellung stark unmaßstäblich ausgeführt. Eine zugehörige Aufsicht auf die Chipkarte 1, bei der auch im Inneren der Chipkarte 1 angeordnete Komponenten gezeigt sind, ist in Fig. 2 dargestellt.

Die Chipkarte 1 weist einen Kartenkörper 2 auf, der bzgl. seiner Abmessungen gemäß der Norm ISO/IEC 7810 ausgebildet sein kann und beim dargestellten Ausführungsbeispiel aus einer unteren Halbschale 3 und einer oberen Halbschale 4 zusammengesetzt ist. Die Halbschalen 3 und 4 sind vorzugsweise aus Kunststoff gefertigt. Zwischen den Halbschalen 3 und 4 ist eine flexible Leiterplatte 5 mit einem ersten Mikrocontroller 6, einer Batterie 7, einem Taster 8 und einer Anzeigeeinrichtung 9 angeordnet. Der Taster 8 ist nur symbolisch dargestellt und wird auf die anhand der Fig. 3 bis 10 im Einzelnen beschriebene Weise nachträglich im Kartenkörper ausgebildet, so dass für die Herstellung des Kartenkörpers insbesondere auch materialerweichende Verfahren wie beispielsweise Heißlamination eingesetzt werden können.

In einer zweistufig ausgebildeten Vertiefung 10 in der oberen Halbschale 4 ist ein Chipmodul 11 angeordnet und über elektrische Verbindungselemente 12 mit der Leiterplatte 5 verbunden. Die elektrischen Verbindungselemente 12 können insbesondere als "Flexible Bumps" ausgebildet sein, die einen gewissen Spielraum bei der Positionierung des Chipmoduls 11 zulassen, so dass das Chipmodul 11 bündig zur Oberfläche des Kartenkörpers 2 ausgerichtet werden kann. Zur mechanischen Fixierung ist das Chipmodul 11 mit dem Kartenkörper 2 verklebt. Das Chipmodul 11 weist einen zweiten Mikrocontroller 13 auf, in dem beispielsweise eine Anwendungssoftware der Chipkarte 1 implementiert ist. Die Verbindungselemente 12 können alternativ auch seitlich beabstandet zum Mikrokontroller 13 zwischen dem Chipmodul 11 und der Leiterplatte 5 angeordnet sein. Weiterhin kann das Chipmodul 11 ein Kontaktfeld 14 aufweisen, das von einem nicht figürlich dargestellten externen Gerät insbesondere für eine Datenübertragung berührend kontaktierbar ist. Das Kontaktfeld 14 kann aber auch entfallen, wenn ausschließlich eine kontaktlose Datenübertragung vorgesehen ist.

Der erste Mikrocontroller 6 dient beim dargestellten Ausführungsbeispiel der Ansteuerung der Anzeigevorrichtung 9, so dass der zweite Mikrocontroller 13 über den ersten Mikrocontroller 6 Zugriff auf die Anzeigevorrichtung 9 hat. Der Taster 8 kann je nach Ausführungsbeispiel unterschiedliche und insbesondere auch mehrere Aufgaben übernehmen. Beispielsweise kann der Taster 8 der Aktivierung der Anzeigevorrichtung 9 dienen. Alternativ dazu oder zusätzlich kann der Taster 8 dazu dienen, den ersten Mikrocontroller 6 in einen definierten Zustand zurückzusetzen. Eine derartige Maßnahme ist erforderlich, wenn der erste Mikrocontroller 6 beispielsweise durch elektrostatische Aufladungseffekte in einen undefinierten Zustand gebracht wurde. Dies kann insbesondere bei der Herstellung der Chipkarte 1 geschehen. Kommt es tatsächlich zu einem undefinierten Zustand des ersten Mikrocontrollers 6, kann die Chipkarte 1 nur dann ihrer bestimmungsgemäßen Verwendung zugeführt werden, wenn es gelingt, den ersten Mikrocontroller 6 in einen definierten Zustand zurückzusetzen. Wie im Folgenden noch näher erläutert wird, kann dies im Rahmen der Erfindung mit Hilfe des Tasters 8 oder auch auf andere Weise geschehen. Ebenso kann auch vorgesehen sein, den zweiten Mikrocontroller 13 mit Hilfe des Tasters 8 in einen definierten Zustand zurückzusetzen. Beim dargestellten Ausführungsbeispiel kann der zweite Mikrocontroller 13 allerdings auch über eine berührende Kontaktierung des Kontaktfeldes 14 in einen definierten Zustand zurückgesetzt werden, so dass der Taster 8 hierfür nicht zwingend benötigt wird. Für dieses Ausführungsbeispiel wird daher lediglich das Zurücksetzen des ersten Mikrocontrollers 6 näher beschrieben. Das Zurücksetzen des zweiten Mikrocontrollers 13 kann auf analoge Weise erfolgen.

Um ein Zurücksetzen des ersten Mikrocontrollers 6 mit Hilfe des Tasters 8 zu ermöglichen, wird der Taster 8 beispielsweise zwischen Masse und einen nicht figürlich dargestellten Reset-Eingang des ersten Mikrocontrollers 6 geschaltet. Der Reset-Eingang des ersten Mikrocontrollers 6 liegt über einen Pull-up-Widerstand, der ebenfalls nicht figürlich dargestellt ist, auf Versorgungsspannungsniveau. Durch Betätigen des Tasters 8 wird der Reset-Eingang des ersten Mikrocontrollers 6 auf Masse gelegt und nach Beendigung der Tasterbetätigung durch den Pull-up-Widerstand wieder auf Versorgungsspannungsniveau hoch gezogen. Eine derartige Potentialänderung am Reset-Eingang des ersten Mikrocontrollers 6 löst ein Zurücksetzen des ersten Mikrocontrollers 6 aus, so dass sich der erste Mikrocontroller 6 nach dem Betätigen des Tasters 8 in einem definierten Zustand befindet.

Wenn der Taster 8 ausschließlich für das Zurücksetzen des ersten Mikrocontrollers 6 vorgesehen ist, kann ein sehr einfach ausgebildeter Taster 8 verwendet werden, der lediglich zwischen einem geöffneten und einem geschlossenen Zustand umgeschaltet werden kann. Diverse Ausführungsbeispiele eines derartigen Tasters 8 werden einschließlich ihrer Herstellung im Folgenden noch näher beschrieben.

Der Taster 8 kann so in den Kartenkörper 2 der Chipkarte 1 eingebaut werden, dass er von außen nicht sichtbar ist. In diesem Fall kann beispielsweise vorgesehen sein, dass der Taster 8 nach Fertigstellung der Chipkarte 1 maschinell betätigt wird, um einen durch den Herstellungsprozess gegebenenfalls entstandenen undefinierten Zustand des ersten Mikrocontrollers 6 wieder zu beseitigen. In einer Abwandlung wird der Taster 8 so ausgeführt, dass er durch ein starkes Biegen der Chipkarte 1 betätigt wird. Dies bedeutet, dass der erste Mikrocontroller 6 durch Biegen der Chipkarte 1 zurückgesetzt werden kann. Auch bei dieser Abwandlung kann der Taster 8 beispielsweise nach Fertigstellung der Chipkarte 1 betätigt werden. Hierzu wird die Chipkarte 1 über entsprechend angeordnete Transportrollen geführt und dabei gebogen.

Alternativ zu einem einfach ausgebildeten Taster 8 kann auch ein Taster 8 eingesetzt werden der zwischen einem geöffneten und zwei verschiedenen geschlossenen Zuständen umgeschaltet werden kann. Der erste geschlossene Zustand wird durch mäßigen Druck auf den Taster 8 erreicht. In den zweiten geschlossenen Zustand wird der Taster 8 durch einen entsprechend stärkeren Druck versetzt. Dabei ist der Taster 8 beispielsweise derart angeschlossen, dass im ersten geschlossenen Zustand die Anzeigevorrichtung 9 aktiviert wird und im zweiten geschlossenen Zustand ein Zurücksetzen des ersten Mikrocontrollers 6 ausgelöst wird. Durch Verwendung eines derartigen zweistufigen Tasters 8 kann somit ein andernfalls erforderlicher zusätzlicher Taster 8 eingespart werden. In den Fällen, in denen ein Taster 8 ohnehin vorgesehen ist, ist zur Realisierung einer Chipkarte 1 mit Rücksetzmöglichkeit der vorgesehene Taster 8 lediglich durch einen zweistufigen Taster 8 zu ersetzen.

Eine weitere Variante der Erfindung sieht vor, den ersten Mikrocontroller 6 ohne die Hilfe des Tasters 8 zurückzusetzen, so dass der Taster 8 für andere Zwecke eingesetzt werden kann. Für das Zurücksetzen ist dann anstelle des Tasters 8 ein Sensor vorgesehen, der beispielsweise als ein Infrarot-Sensor ausgebildet ist und in gleicher Weise, wie für den Taster 8 beschrieben, angeschlossen ist. Der Sensor befindet sich vorzugsweise im Inneren des Kartenkörpers 2. Wenn der Sensor mit Infrarot-Strahlung oberhalb eines Schwellwerts bestrahlt wird, löst er ein Zurücksetzen des ersten Mikrocontrollers 6 aus. Der Schwellwert wird dabei so gewählt, dass er durch das übliche Umgebungslicht nicht überschritten wird. Erst durch Einwirkung starker Infrarot-Strahlung wird der Schwellwert überschritten. Dabei kann zur Erzielung einer ausreichenden Strahlungsintensität eine Fokussierung der Infrarot-Strahlung vorgesehen werden. Als Sensor kann beispielsweise auch eine Solarzelle, ein lichtempfindlicher Widerstand (LDR) usw. verwendet werden.

Weiterhin ist es auch möglich, den ersten Mikrocontroller 6 mit Hilfe des zweiten Mikrocontrollers 13 zurückzusetzen, so dass für das Zurücksetzen weder ein Taster 8 noch ein Sensor benötigt wird und wiederum die Möglichkeit besteht, den Taster 8 für andere Zwecke einzusetzen. Diese Variante kann mit Hilfe eines zweiten Mikrocontrollers 13 realisiert werden, der eine zusätzliche I/O-Leitung aufweist. Diese I/O-Leitung dient dazu, den Reset-Eingang des ersten Mikrocontrollers 6 auf Masse zu legen und dadurch ein Zurücksetzen des ersten Mikrocontrollers 6 auszulösen. Bei dieser Variante wird ein Befehl an den zweiten Mikrocontroller 13 übermittelt, auf den hin der zweite Mikrocontroller 13 ein Zurücksetzen des ersten Mikrocontrollers 6 auslöst. Der Befehl kann gleichermaßen über eine berührende Kontaktierung der Chipkarte 1 oder kontaktlos übermittelt werden, so dass sich diese Vorgehensweise sowohl für kontaktlose als auch für kontaktbehaftete Chipkarten 1 eignet.

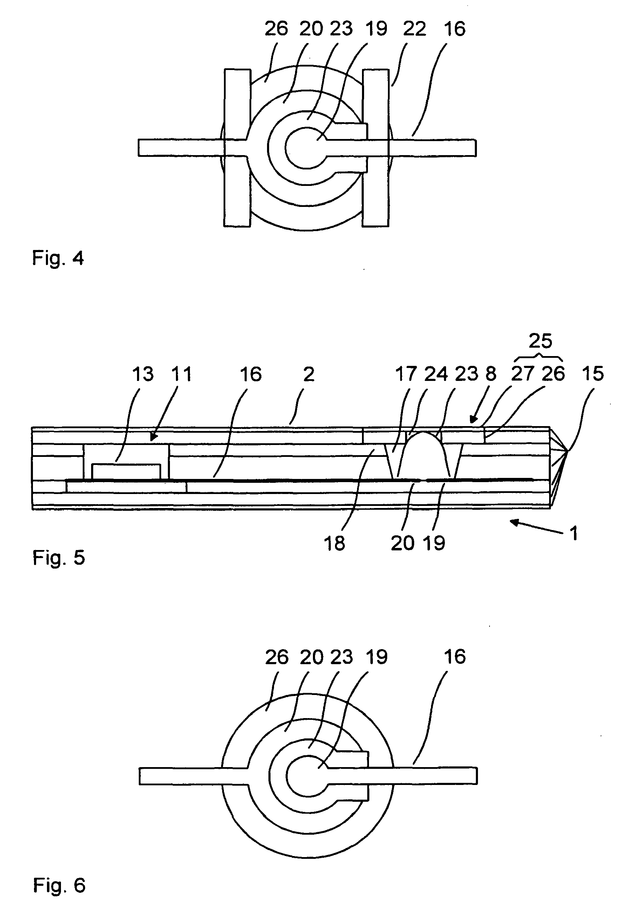

Fig. 3 zeigt eine Variante der Chipkarte 1 mit einem ersten, erfindungsgemäßen Ausführungsbeispiel des Tasters 8 in einer schematischen Schnittdarstellung. Die Darstellung ist aus Gründen der Anschaulichkeit stark unmaßstäblich. Eine zugehörige Ansicht von unten auf den Taster 8 ist in Fig. 4 dargestellt.

Der Kartenkörper 2 der Chipkarte 1 ist aus mehreren Kunststofffolien 15 hergestellt. Bei der dargestellten Variante wurden sieben Kunststofffolien 15 verwendet. Als Material für die Kunststofffolien 15 eignet sich beispielsweise PVC. Zur Herstellung der Chipkarte 1 werden die Kunststofffolien 15 im Bogenformat übereinander gestapelt und durch Heißlamination miteinander verbunden. Zuvor werden auf wenigstens eine der Kunststofffolien 15 Leiterbahnen 16 aufgebracht, beispielsweise durch Bedrucken mit Silberleitpaste. Die Leiterbahnen 16 können zur Ausbildung von elektrischen Verbindungen und auch als Antenne dienen. Bei der Heißlamination erweichen die Kunststofffolien 15 und verschmelzen miteinander. Optional kann dabei ein Laminierkleber eingesetzt werden, der die Kunststofffolien 15 miteinander verbindet. Der Laminierkleber kann beispielsweise in Form dünner Folien eingesetzt werden, die jeweils zwischen benachbarten Kunststofffolien 15 angeordnet werden. Ebenso ist es möglich, die Kunststofffolien 15 mit dem Laminierkleber zu beschichten oder koextrudierte Kunststofffolien 15 zu verwenden.

Nach der Heißlamination werden die Chipkarten 1 durch Ausstanzen vereinzelt. Das Chipmodul 11 kann bereits bei der Heißlamination in den Folienstapel eingebunden sein oder nachträglich implantiert werden. Beim dargestellten Ausführungsbeispiel verfügt das Chipmodul 11 über ein Kontaktfeld 14, das bündig mit der Oberfläche des Kartenkörpers 2 abschließt.

Zur Ausbildung des Tasters 8 wird eine Kavität 17 in den Kartenkörper 2 gefräst. Die Kavität 17 wird bevorzugt zweistufig ausgebildet, so dass sie eine umlaufende Schulter 18 aufweist. Bei der Ausbildung der Kavität 17 werden im Bereich der Schulter 18 die Leiterbahnen 16, an die der Taster 8 angeschlossen werden soll, freigelegt. Durch eine vor der Heißlamination durchgeführte Ablackierung der an die Leiterbahnen 16 angrenzenden Kunststofffolie 15 im freizulegenden Bereich kann das Freilegen der Leiterbahnen 16 erleichtert und dadurch etwaige Beschädigungen vermieden werden. Am Boden der Kavität 17 wird ein erster Schaltkontakt 19 in Form einer Kreisscheibe beispielsweise durch Aufbringen von Silberleitpaste ausgebildet. Weiterhin wird am Boden der Kavität 17 in entsprechender Weise ein zweiter Schaltkontakt 20 ausgebildet, der die Form eines einseitig offenen Rings aufweist und den ersten Schaltkontakt 19 in einem Abstand konzentrisch umgibt. Der erste Schaltkontakt 19 und der zweite Schaltkontakt 20 sind durch je ein Anschlusselement 21 mit je einer der Leiterbahnen 16 verbunden, die sich bis zum Rand der Kavität 17 erstrecken. Die Anschlusselemente 21 können mittels Silberleitpaste ausgebildet werden, die jeweils streifenförmig auf die Seitenwand der Kavität 17 aufgebracht wird. Ebenso können dünne Metallstreifen für die Anschlusselemente 21 verwendet werden. Um eine zuverlässige elektrische Verbindung zwischen den Anschlusselementen 21 und den Leiterbahnen 16 zu gewährleisten, weisen die Leiterbahnen 16 verbreiterte Anschlussbereiche 22 auf, die beim Ausbilden der Kavität 17 freigelegt werden.

In die Kavität 17 wird eine metallische Schnappscheibe 23 eingesetzt, die in eine Aussparung 24 eines Deckels 25 eingreift. Der Deckel 25 besteht aus einer Deckelfolie 26, insbesondere einer FR4-Folie und einer Metallschicht 27, die zur Außenseite des Kartenkörpers 2 hin auf der Deckelfolie 26 ausgebildet ist. Der Deckel 25 wird beispielsweise mittels eines Heißsiegelklebers im Bereich der Schulter 18 der Kavität 17 derart mit dem Kartenkörper 2 verklebt, dass er die Kavität 17 abdeckt und bündig mit der Oberfläche des Kartenkörpers 2 abschließt. Anstelle einer vollständig metallischen Schnappscheibe kann wahlweise auch eine teilweise metallische Schnappscheibe mit Kunststoffdom verwendet werden.

Der Taster 8 wird durch Druckausübung auf den Deckel 25 betätigt. Dadurch wölbt sich der Deckel 25 zum Boden der Kavität 17 hin und verschiebt und verformt die Schnappscheibe 23 so, dass diese berührend an beiden Schaltkontakten 19 und 20 anliegt. Somit wird über die Schnappscheibe 23 eine elektrisch leitende Verbindung zwischen den beiden Schaltkontakten 19 und 20 ausgebildet und dadurch die an die Schaltkontakte 19 und 20 angeschlossenen Leiterbahnen 16 miteinander verbunden. Sobald der Druck auf den Deckel 25 aufgehoben wird, federt dieser infolge seiner eigenen Elastizität und der Elastizität der Schnappscheibe 23 in seine Ausgangslage zurück. Dadurch wird der berührende Kontakt zwischen der Schnappscheibe 23 und den beiden Schaltkontakten 19 und 20 wieder aufgehoben und die über die Schnappscheibe 23 ausgebildete elektrische Verbindung wieder unterbrochen. Durch die Schnappscheibe 23 ist bei Betätigung des Tasters 8 eine taktile Rückmeldung spürbar. Die Ausprägung der taktilen Rückmeldung hängt insbesondere von der Ausbildung der Schnappscheibe 23 und des Deckels 25 ab.

Fig. 5 zeigt eine weitere Variante der Chipkarte 1 mit einem zweiten, nicht erfindungsgemäßen Ausführungsbeispiel des Tasters 8 in einer Fig. 3 entsprechenden Darstellung. In Fig. 6 ist der Taster 8 in einer Fig. 4 entsprechenden Darstellung gezeigt. Im Unterschied zu der in Fig. 3 dargestellten Variante der Chipkarte 1 weist das Chipmodul 11 kein Kontaktfeld 14 auf und ist vollständig in den Kartenkörper 2 eingebettet. Die mit dem Chipmodul 11 verbundenen Leiterbahnen 16 verlaufen in einer Ebene, in welcher der Boden der Kavität 17 ausgebildet ist. Wenigstens einige der Leiterbahnen 16 erstrecken sich dabei bis in den Bereich der Kavität 17. Diese Leiterbahnen 16 werden beim Ausbilden der Kavität 17 teilweise freigelegt.

Die Schaltkontakte 19 und 20 sind in entsprechender Weise wie beim ersten Ausführungsbeispiel des Tasters 8 geformt und direkt mit den Leiterbahnen 16 verbunden. Die beim ersten Ausführungsbeispiel des Tasters 8 vorhandenen Anschlusselemente 21 und verbreiterten Anschlussbereiche 22 der Leiterbahnen 16 sind beim zweiten Ausführungsbeispiel nicht vorgesehen. Im Übrigen entspricht das zweite Ausführungsbeispiel des Tasters 8 hinsichtlich seiner Ausbildung und Funktionsweise dem ersten Ausführungsbeispiel.

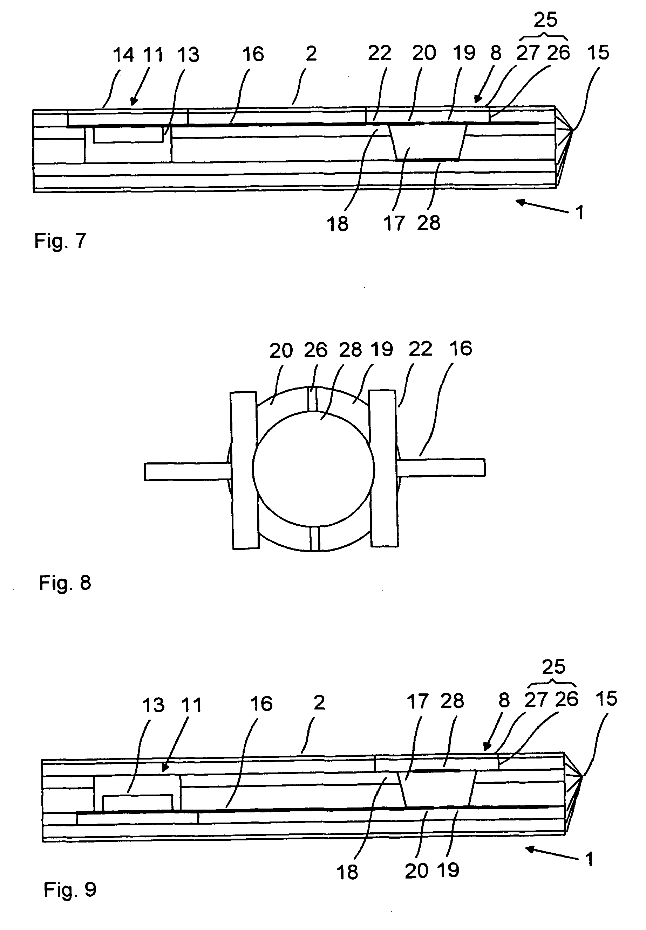

Fig. 7 zeigt die in Fig. 3 dargestellte Variante der Chipkarte 1 mit einem dritten, erfindungsgemaßen Ausführungsbeispiel des Tasters 8 in einer Fig. 3 entsprechenden Darstellung. In Fig. 8 ist der Taster 8 in einer Fig. 4 entsprechenden Darstellung gezeigt. Analog zu Fig. 3 weist das Chipmodul 11 ein Kontaktfeld 14 auf und sind die Leiterbahnen 16 in der Ebene der Schulter 18 der Kavität 17 ausgebildet. Allerdings ist beim dritten Ausführungsbeispiel des Tasters 8 im Gegensatz zum ersten und zweiten Ausführungsbeispiel keine Schnappscheibe 23 vorgesehen und der Taster 8 dem entsprechend anders aufgebaut. In dieser Ausführungsform ist der Taster wegen des Fehlens der Schnappscheibe nicht taktil. Der Vorteil besteht in der einfacheren und somit kostengünstigeren Herstellung, sowie der kleineren Bauform.

Zur Herstellung des dritten Ausführungsbeispiels des Tasters 8 wird auf die bereits beschriebene Weise die Kavität 17 ausgebildet. Dabei werden die verbreiterten Anschlussbereiche 22 der Leiterbahnen 16 im Bereich der Schulter 18 der Kavität 17 freigelegt. Der Boden der Kavität 17 wird mit einer elektrisch leitenden Beschichtung 28 versehen. Alternativ dazu kann die Beschichtung 28 bereits vorhanden sein und durch die Ausbildung der Kavität 17 freigelegt werden. Der Deckel 25 weist auf seiner der Kavität 17 zugewandten Seite die beiden Schaltkontakte 19 und 20 auf, die als zueinander benachbarte Segmente einer Kreisscheibe ausgebildet sind und in einem Abstand zueinander angeordnet sind. Der Deckel 25 wird mittels eines anisotropen Leitklebers im Bereich der Schulter 18 der Kavität 17 mit dem Kartenkörper 2 verklebt. Durch den anisotropen Leitkleber wird eine elektrisch leitende Verbindung lediglich in einer Richtung senkrecht zur Oberfläche der Schulter 18 ausgebildet. Dies führt dazu, dass die beiden Schaltkontakte 19 und 20 auch bei einem vollflächigen Auftrag des anisotropen Leitklebers nicht kurzgeschlossen werden, sondern jeweils lediglich mit dem darunter angeordneten Anschlussbereich 22 einer der Leiterbahnen 16 verbunden werden.

Beim Betätigen des Tasters 8 durch Druck auf den Deckel 25 wölbt sich der Deckel 25 in die Kavität 17 hinein, so dass ein berührender Kontakt zwischen den Schaltkontakten 19 und 20 und der Beschichtung 28 am Boden der Kavität 17 ausgebildet wird. Dies bedeutet, dass durch die Beschichtung 28 die beiden Schaltkontakte 19 und 20 und somit auch die daran angeschlossenen Leiterbahnen 16 elektrisch leitend miteinander verbunden werden. Nach Beendigung der Druckausübung auf den Deckel 25 federt der Deckel 25 in seine Ausgangsposition zurückt, so dass die elektrische Verbindung zwischen den Schaltkontakten 19 und 20 wieder aufgehoben wird.

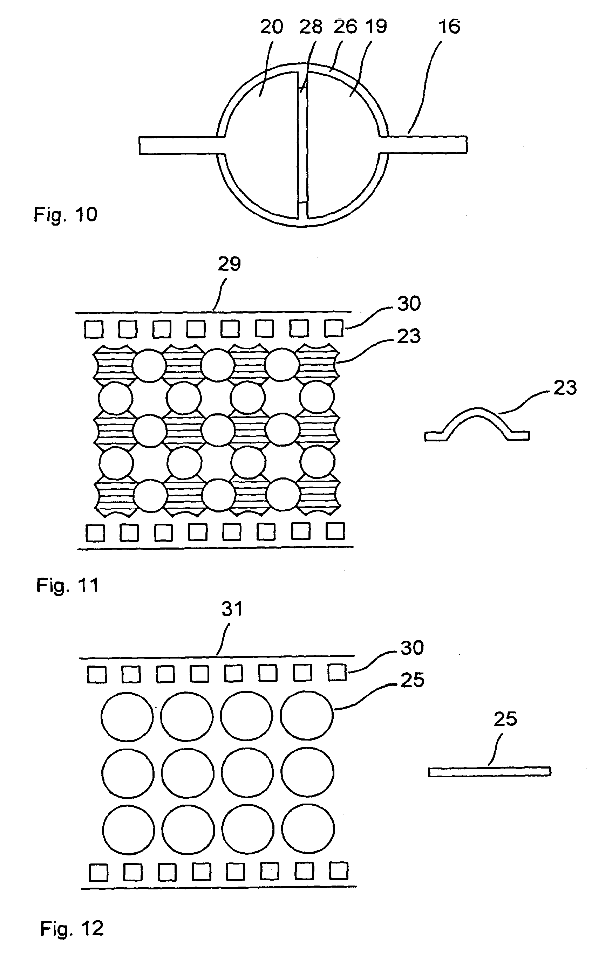

Fig. 9 zeigt die in Fig. 5 dargestellte Variante der Chipkarte 1 mit einem vierten, nicht erfindungsgemäßen Ausführungsbeispiel des Tasters 8 in einer Fig. 3 entsprechenden Darstellung. In Fig. 10 ist der Taster 8 in einer Fig. 4 entsprechenden Darstellung gezeigt. Analog zu Fig. 5 ist das Chipmodul 11 vollständig in den Kartenkörper 2 eingebettet. Die Leiterbahnen 16 verlaufen in einer Ebene des Kartenkörpers 2, in der auch der Boden der Kavität 17 für den Taster 8 ausgebildet wird. Ebenso wie das dritte Ausführungsbeispiel weist auch das vierte Ausführungsbeispiel des Tasters 8 keine Schnappscheibe 23 auf.

Zur Herstellung des vierten Ausführungsbeispiels des Tasters 8 wird zunächst wieder die Kavität 17 ausgebildet. Dabei werden die Schaltkontakte 19 und 20 freigelegt, die beim vierten Ausführungsbeispiel des Tasters 8 am Boden der Kavität 17 angeordnet und direkt mit den Leiterbahnen 16 verbunden sind. Die Schaltkontakte 19 und 20 sind beispielsweise als Segmente einer Kreisscheibe ausgebildet und in einem Abstand voneinander angeordnet. Die Kavität 17 wird mit dem Deckel 25 verschlossen, der beim vierten Ausführungsbeispiel des Tasters 8 auf seiner der Kavität 17 zugewandten Seite die elektrisch leitende Beschichtung 28 aufweist, die beim dritten Ausführungsbeispiel am Boden der Kavität 17 angeordnet ist. Der Deckel 25 wird mittels eines Heißsiegelklebers im Bereich der Schulter 18 der Kavität 17 mit dem Kartenkörper 2 verklebt. Die Verwendung eines leitfähigen Klebers ist nicht erforderlich.

Bei Betätigung des Tasters 8 wird in ähnlicher Weise wie für das dritte Ausführungsbeispiel des Tasters 8 beschrieben durch die Beschichtung 28 eine elektrisch leitende Verbindung zwischen den beiden Schaltkontakten 19 und 20 ausgebildet. Unterschiede bestehen dabei insofern als die Schaltkontakte 19 und 20 und die Beschichtung 28 beim dritten und vierten Ausführungsbeispiel zueinander vertauscht angeordnet sind.

Die vorstehend beschriebenen Ausführungsbeispiele des Tasters 8 können zum Zurücksetzen des ersten Mikrocontrollers 6, des zweiten Mikrocontrollers 13 oder einer sonstigen elektronischen Schaltung in einen definierten Zustand verwendet werden. Ebenso ist es auch möglich, einen derart hergestellten Taster 8 für andere Zwecke zu verwenden. Das beschriebene Verfahren bezieht sich somit auch allgemein auf die Herstellung einer Chipkarte 1 oder eines sonstigen tragbaren Datenträgers, wobei eine Kavität 17 für einen Taster 8 oder eine sonstige Schalteinrichtung ausgebildet wird.

Bei einer Abwandlung der Erfindung wird auf die beschriebene Weise jeweils nicht nur ein einzelner Taster 8, sondern eine Anordnung mit mehreren Tastern 8 hergestellt. Dabei wird vorzugsweise ein gemeinsamer Deckel 25 verwendet, der mehrere Kavitäten 17 abdeckt.

Um den Aufwand für die Ausbildung des Tasters 8 möglichst gering zu halten, ist insbesondere eine effiziente Handhabung der für die Ausbildung des Tasters 8 verwendeten Komponenten, die zum Teil sehr kleine Abmessungen aufweisen, erforderlich. Mögliche Vorgehensweisen und geeignete Hilfsmittel werden im Folgenden näher beschrieben.

Fig. 11 zeigt ein Ausführungsbeispiel für ein Metallband 29 mit vorgefertigten Schnappscheiben 23 in einer schematischen Aufsicht. Die Schnappscheiben 23 sind jeweils durch eine Schraffur kenntlich gemacht. Weiterhin ist in Fig. 11 eine der Schnappscheiben 23 in einer schematisierten Schnittdarstellung abgebildet. Bei dem Metallband 29 kann es sich beispielsweise um 35 mm breites Standardband handeln, das beidseits eine Transportperforation 30 aufweist. Zum Transport kann das Metallband 29 zu einer Spulenform zusammengerollt werden. Das gilt jeweils auch für die weiteren Bänder, die im Folgenden noch beschrieben werden. Das Metallband 29 kann bei der Herstellung des ersten und zweiten Ausführungsbeispiels des Tasters 8 (siehe Fig. 3 bis 6) verwendet werden. Hierzu wird jeweils eine Schnappscheibe 23 aus dem Metallband 29 ausgestanzt und ohne Fixierung in die Kavität 17 eingelegt. Damit die Schnappscheibe 23 während der Weiterverarbeitung nicht in der Kavität 17 verrutscht, sind die Formgebung der Schnappscheibe 23 und der Kavität 17 entsprechend aufeinander abgestimmt.

Fig. 12 zeigt ein Ausführungsbeispiel für ein Kunststoffband 31, das mit dem Design der Deckel 25 bedruckt ist, in einer schematischen Aufsicht. Weiterhin ist in Fig. 12 einer der Deckel 25 in einer schematisierten Schnittdarstellung abgebildet. Anstelle des aufgedruckten Designs oder zusätzlich zu dem Design kann auf das Kunststoffband 31 auch die Metallschicht 27 aufgebracht sein. Das Kunststoffband 31, das beispielsweise aus PET (Polyethylenterephtalat), PETG, Kapton oder FR4 besteht, kommt in Kombination mit dem in Fig. 11 dargestellten Metallband 29 zum Einsatz. Dabei wird jeweils ein Deckel 25 aus dem Kunststoffband 31 ausgestanzt, das zuvor mit einer thermoaktivierbaren Klebefolie vorlaminiert wird. Durch entsprechende Stanzung der thermoaktivierbaren Klebefolie wird erreicht, dass ein Bereich im Zentrum des Deckels 25 frei bleibt. Der ausgestanzte Deckel 25 wird auf die Schulter 18 der Kavität 17 aufgelegt und mit dieser verklebt.

Soll eine Anordnung mit mehreren Tastern 8 mit Deckeln 25 bestückt werden, so werden zunächst alle Schnappscheiben 23 eingelegt, die einzeln oder gruppenweise aus dem Metallband 29 ausgestanzt werden und dann alle Deckel 25 aufgelegt und gleichzeitig mit dem Kartenkörper 2 verklebt.

Alternativ dazu besteht auch die Möglichkeit für die Anordnung von Tastern 8 einen gemeinsamen Deckel 25 vorzusehen. In diesem Fall werden wiederum zunächst alle Schnappscheiben 23 in die Kavitäten 17 eingelegt. Anschließend wird der gemeinsame Deckel 25 aufgelegt und mit dem Kartenkörper verklebt.

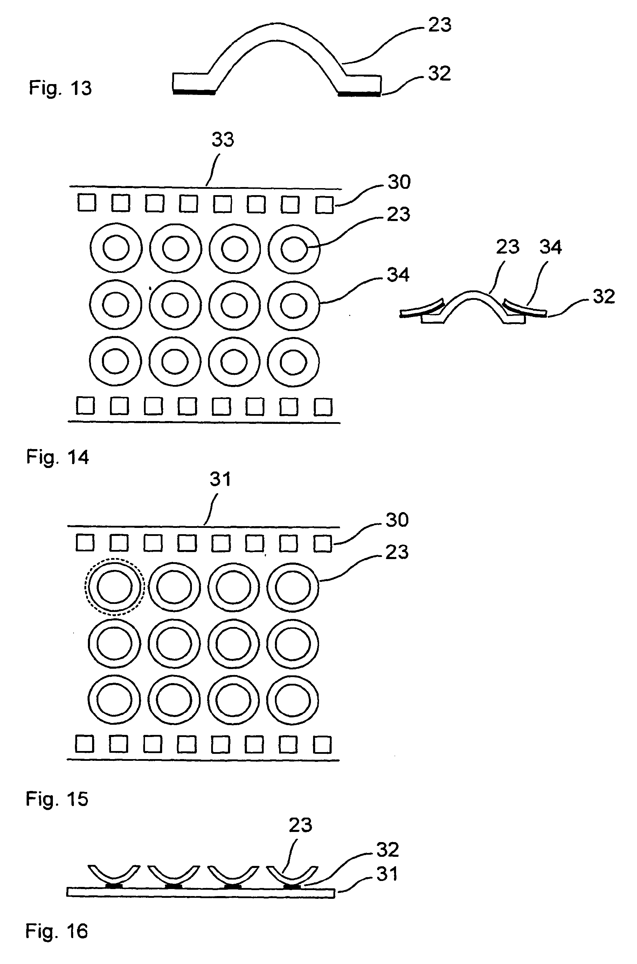

Fig. 13 zeigt eine Schnappscheibe 23 eines weiteren Ausführungsbeispiels des Metallbands 29 in einer schematischen Schnittdarstellung. Die in Fig. 13 dargestellte Schnappscheibe 23 zeichnet sich dadurch aus, dass sie auf ihrer Unterseite mit einem vorzugsweise thermoaktivierbaren Klebstoff 32 beschichtet ist. Zur Herstellung des Tasters 8 wird die Schnappscheibe 23 aus dem Metallband 29 ausgestanzt, in die Kavität 17 eingesetzt und dabei der Klebstoff 32 aktiviert, so dass die Schnappscheibe 23 mit dem Klebstoff 32 in der Kavität fixiert wird. Die Fertigstellung des Tasters 8 erfolgt dann in der bereits beschriebenen Weise.

Fig. 14 zeigt ein Ausführungsbeispiel für ein Trägerband 33, das mit Schnappscheiben 23 bestückt ist, in einer schematischen Aufsicht. Weiterhin ist in Fig. 13 eine der Schnappscheiben 23 in einer schematisierten Schnittdarstellung abgebildet. Das Trägerband 33 kann das gleiche Format wie das Metallband 29 und das Kunststoffband 31 besitzen und mit einer Transportperforation 30 ausgestattet sein. Vorzugsweise besteht das Trägerband 33 aus Papier, das mit Silikon oder einer sonstigen Antihaftbeschichtung versehen ist. Auf dem Trägerband 33 sind die Schnappscheiben 23 mittels Kleberingen 34 fixiert, die über die Schnappscheiben 23 gestülpt sind und lediglich auf ihrer dem Trägerband 33 zugewandten Seite mit Klebstoff 32 versehen sind. Die Schnappscheiben 23 sind folglich mit ihren offenen Enden auf das Trägerband 33 aufgeklebt. Dabei wird insbesondere ein Klebstoff 32 verwendet, der nicht thermoaktivierbar ist.

Bei der Herstellung des Tasters 8 wird jeweils eine Schnappscheibe 23 inklusive Klebering 34 vom Trägerband 33 abgezogen und in die Kavität 17 eingeklebt. Da der Klebering 34 radial über die Schnappscheibe 23 übersteht, wird die Kavität 17 etwas größer bemessen als es dem Außendurchmesser der Schnappscheibe 23 entspräche. Die Fertigstellung des Tasters 8 erfolgt dann in der bereits beschriebenen Form.

Fig. 15 zeigt ein Ausführungsbeispiel für ein Kunststoffband 31, das mit Schnappscheiben 23 bestückt ist, in einer schematischen Aufsicht. Eine zugehörige schematische Schnittdarstellung ist in Fig. 16 dargestellt. Die Schnittebene verläuft dabei mittig in Längsrichtung des Kunststoffbands 31. Beim dargestellten Ausführungsbeispiel sind drei Reihen von Schnappscheiben 23 auf dem Kunststoffband 31 nebeneinander angeordnet. Alternativ dazu können auch zwei Reihen oder eine sonstige Anzahl Reihen von Schnappscheiben 23 auf dem Kunststoffband 31 angeordnet sein.

Auf einer Hauptfläche des Kunststoffbands 31 sind die Schnappscheiben 23 mit ihren geschlossenen Enden mittels des Klebstoffs 32 aufgeklebt oder auf andere Weise, zum Beispiel durch Nieten, Schweißen, Krimpen, befestigt. Auf der dazu rückwärtigen Hauptfläche des Kunststoffbands 31 ist analog zu dem in Fig. 12 dargestellten Ausführungsbeispiel das Design der Deckel 25 aufgedruckt. Aus dem Kunststoffband 31 können somit Einheiten aus einem oder mehreren Schnappscheiben 23, die an einen oder mehreren Deckeln 25 angeklebt sind, ausgestanzt werden. Der Umriss einer solchen Stanzung ist durch eine gestrichelte Linie angedeutet. Damit es beim Aufrollen des Kunststoffbandes 31 nicht zu Beschädigungen, beispielsweise zu Kratzern oder Verformungen kommt, können Abstandshalter vorgesehen werden, um die Komponenten des Kunststoffbands 31 voneinander zu trennen.

Zur Bestückung des Kunststoffbands 31 mit den Schnappscheiben 23 wird zunächst der Klebstoff 32 in Form von Klebepunkten oder vollflächig aufgebracht. Die Klebepunkte werden vorzugsweise durch Dosieren des Klebstoffs 32 oder durch Aufbringen eines Films ausgebildet. Ein vollflächiger Kleberauftrag lässt sich insbesondere durch auflaminieren einer beispielsweise thermoaktivierbaren Klebefolie erzielen. Soweit dies erforderlich ist wird der Klebstoff 32 beispielsweise mittels UV-Bestrahlung aktiviert. Dann werden die Schnappscheiben 23 mittels eines Pick-and-Place-Automaten auf das Kunststoffband 31 aufgebracht und mittels eines Andruckstempels, insbesondere eines Heizstempels, fixiert. Soweit erforderlich, wird das bestückte Kunststoffband 31 einer Kleberaushärtestation zugeführt und anschließend aufgerollt.

Zum Herstellen des Tasters 8 werden Lochstanzungen in eine Klebefolie eingebracht, die Klebefolie über die Schnappscheiben 23 gestreift und auf das Kunststoffband 31 auflaminiert. Diese Schritte können entfallen, wenn das Kunststoffband 31 bereits bei der Bestückung mit den Schnappscheiben vollflächig mit einer Klebefolie versehen wurde. Anschließend wird die Kontur des Deckels 25 aus dem Kunststoffband 31 ausgestanzt und die Einheit aus Deckel 25 und Schnappscheibe 23 in die Kavität 17 eingesetzt und verklebt. In analoger Weise können zur Ausbildung einer Anordnung von Tastern 8 gleichzeitig mehrere Einheiten aus je einem Deckel 25 und je einer Schnappscheibe 23 implantiert werden. Ebenso ist es auch möglich, zur Ausbildung einer Anordnung von Tastern 8 einen gemeinsamen Deckel 25, der mehrere Schnappscheiben aufweist, aus dem Kunststoffband 31 auszustanzen und mit dem Kartenkörper 2 zu verkleben.

Die bisher beschriebenen Taster 8 werden jeweils von der Vorderseite des Kartenkörpers 2 in den Kartenkörper 2 eingebaut. Die Aktivierung des Tasters 8 erfolgt dann ebenfalls von der Vorderseite des Kartenkörpers 2 beispielsweise durch ein Niederdrücken des Deckels 25. Alternativ kann der Taster 8 aber auch von der Rückseite des Datenträgers eingebaut und mit einem Deckel versehen werden. In diesem Fall wird der rückseitige Deckel möglichst formstabil (z. B. aus FR4) ausgelegt. Die Aktivierung des Tasters erfolgt weiterhin über die Vorderseite des Kartenkörpers. Insbesondere wird die Kavität ausreichend tief von der Rückseite her in den Kartenkörper ausgebildet, so daß das verbleibende Material des Kartenkörpers die vorderseitige Aktivierung des rückseitig eingebauten Tasters ermöglicht.

Eine solche Ausbildung hat den Vorteil, daß auf der Vorderseite des Kartenkörpers auch im Bereich des Tasters gedruckt werden kann. Zudem kann die Schnappscheibe leicht auf dem Tape vormontiert werden. Bei dieser Variante muß auf der Innenseite des Tapes das Schaltungslayout für den Taster abgebildet sein. Die Anbindung der Tape-Schaltung zur Schaltung in der Karte erfolgt beispielsweise mittels "flexible-Bumps" oder ACF-Kleber. Das Tape kann beispielsweise rund oder eckig ausgestanzt werden. Die Vormontage der Schnappscheiben auf dem Tape kann beispielsweise mittels Klebering, ACF oder Löten erfolgen. Die Anordnung auf dem Tape erfolgt analog Fig. 12, 14. Je nach Breite des Tapes sind evtl. auch Zweier-Reihen von Tastern möglich.

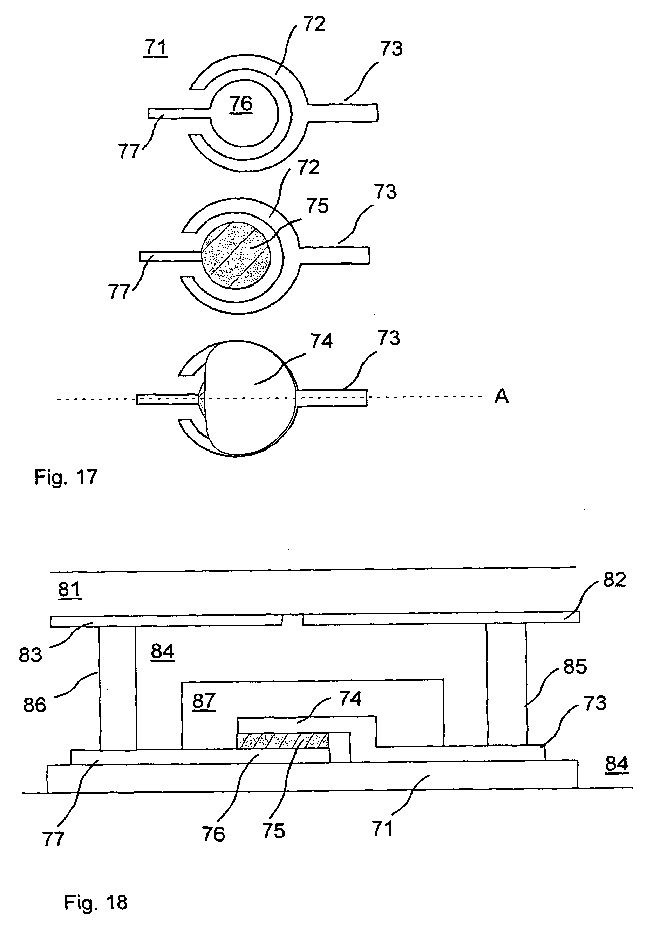

Ein piezoelektrisches Tastermodul wird im Folgenden mit Bezug auf die Fig. 17 und 18 beschrieben als eine weitere Ausführungsform eines nachträglich in einen Kartenkörper integrierbaren Tastermoduls.

In Fig. 17 sind beispielhaft drei Herstellungsphasen für einen piezoelektrischen Tastern dargestellt. Auf einem nicht leitenden Träger 71 werden in einer ersten Phase erste und zweite Schaltkontakte 72, 76 sowie zugehörige Anschlussleitungen 73, 77 angeordnet. Auf den zweiten Schaltkontakt 76 wird in einer zweiten Phase eine Piezoschicht 75, vorzugsweise aus Piezolack oder als Piezoelement, aufgebracht. In einer dritten Phase wird eine leitfähige Verbindungsschicht 74 auf die Piezoschicht 75 und den ersten Schaltkontakt 72 aufgebracht. Insbesondere können die leitfähigen Schichten 72, 73, 74, 76 und 77 und/ oder auch die Piezoschicht 75 aufgedruckt oder auflackiert werden.

Piezoelektrische Taster können analog wie zu den Fig. 11, 12 sowie 14 - 16 beschrieben auf einem Trägerband bereitgestellt werden. Beispielsweise kann ein 35mm-Trägerband aus FR4 oder PETG verwendet werden, wobei die leitfähigen Bereiche vorzugsweise durch vergoldetes Kupfer gebildet sind. Durch Ausstanzen in entsprechender Größe entstehen einzelne Tastermodule.

Für die Schnittlinie A aus Fig. 17 zeigt Fig. 18 ein vereinzeltes piezoelektrische Tastermodul 71 - 77 in seinem in eine Karte 81 - 86 eingebauten Zustand. In dem Kartenkörper 81, 84 ist in einem Bereich 84 eine vorzugsweise zweistufige Kavität zur Aufnahme des piezoelektrischen Tastermoduls 71 - 77 ausgebildet. Auf einer ersten Trägerschicht 81 des Kartenkörpers ist eine elektrische Schaltung angeordnet, die zumindest erste und zweite Anschlussleitungen 82, 83 umfassen. Die Anschlussleitungen 73, 77 des Tastermoduls sind über Verbindungselemente 85, 86, beispielsweise in der Form von sogenannten "flexible Bumps" oder von leitfähigem Kleber, mit den Anschlussleitungen 82, 83 des Kartenkörpers verbunden. Der funktionale Bereich des Tasters 74, 75 und 76 ist vorzugsweise über einem Bewegungshohlraum der Kavität 87 in dem Bereich 84 des Kartenkörpers angeordnet. Die mechanische Verbindung zwischen Kartenkörper und Tastermodul kann beispielsweise durch (Heiß-)Lamination oder (Kalt-)Verklebung hergestellt werden.

## Patentansprüche

1. Verfahren zur Herstellung eines tragbaren Datenträgers (1), der wenigstens eine elektronische Schaltung (6), eine von außerhalb des tragbaren Datenträgers (1) betätigbare Schalteinrichtung (8) und einen die elektronische Schaltung (6,13) und die Schalteinrichtung (8) aufnehmenden Körper (2) aufweist, wobei nach der Herstellung des Körpers (2) eine Kavität (17) für die Schalteinrichtung (8) in den Körper (2) eingearbeitet wird und bei der Ausbildung der Kavität (17) wenigstens ein erster elektrisch leitender Bereich (22) freigelegt wird, der mit der elektronischen Schaltung (6) verbunden ist und an den die Schalteinrichtung (8) angeschlossen wird,
**dadurch gekennzeichnet, dass**
der Körper (2) durch Heißlamination von Kunststoffteilen (15) hergestellt wird,
die Kavität (17) für die Schalteinrichtung (8) als zweistufige Kavität in den Körper (2) eingearbeitet wird,
der wenigstens eine erste elektrisch leitende Bereich (22) im Bereich
einer Schulter (18) der zweistufigen Kavität (17) angeordnet ist,
ein zweiter elektrisch leitender Bereich (19,20; 28) im Boden der zweistufigen Kavität freigelegt oder ausgebildet wird und
die Schalteinrichtung (8) zwei elektrisch miteinander zu verbindende Schaltkontakte aufweist, die durch den zweiten elektrischen Bereich (19,20) gebildet werden oder beim Betätigen der Schalteinrichtung (8) den zweiten elektrisch leitenden Bereich (28) berühren.

2. Verfahren nach Anspruch 1, **dadurch gekennzeichnet, dass** die Schalteinrichtung (8) als ein mechanischer Taster ausgebildet wird.

3. Verfahren nach einem der vorhergehenden Ansprüche, **dadurch gekennzeichnet, dass** innerhalb der Kavität (17) ein elastisch deformierbares Element (23) angeordnet wird.

4. Verfahren nach Anspruch 3, **dadurch gekennzeichnet, dass** das elastisch deformierbare Element (23) in die Kavität (17) eingeklebt wird.

5. Verfahren nach einem der vorhergehenden Ansprüche, **dadurch gekennzeichnet, dass** die Kavität (17) mit einem Deckel (25) verschlossen wird.

6. Verfahren nach Anspruch 5, **dadurch gekennzeichnet, dass** der Deckel (25) elastisch deformierbar ausgebildet wird.

7. Verfahren nach Anspruch 6, **dadurch gekennzeichnet, dass** die Geometrie der Kavität (17) so gewählt wird, dass die Schaltkontakte (19, 20) durch eine elastische Deformation des Deckels (25) elektrisch miteinander verbunden werden können.

8. Verfahren nach einem der Ansprüche 3 bis 7, **dadurch gekennzeichnet, dass** das elastisch deformierbare Element (23) und/ oder der Deckel (25) einem flachstückartigen Halbzeug (29, 31, 33) entnommen werden.

9. Verfahren nach einem der Ansprüche 5 bis 8, **dadurch gekennzeichnet, dass** das elastisch deformierbare Element (23) und der Deckel (25) in Form einer dauerhaft miteinander verbundenen Einheit verarbeitet werden.

10. Verfahren nach einem der vorhergehenden Ansprüche, **dadurch gekennzeichnet, dass** eine Vielzahl von Kavitäten (17) in den Körper (2) eingearbeitet wird.

11. Verfahren nach Anspruche 10, **dadurch gekennzeichnet, dass** mehrere Kavitäten (17) durch einen gemeinsamen Deckel (25) verschlossen werden.

12. Verfahren nach einem der vorhergehenden Ansprüche, **dadurch gekennzeichnet, dass** der tragbare Datenträger (1) mit einer Rücksetzeinrichtung ausgerüstet wird, die von außerhalb des tragbaren Datenträgers (1) betätigbar ist und mit deren Hilfe eine Überführung der elektronischen Schaltung (6,13) in einen definierten Zustand auslösbar ist.

13. Tragbarer Datenträger zur Speicherung und/ oder Verarbeitung von Daten, mit einer elektronischen Schaltung (6), einer von außerhalb des tragbaren Datenträgers (1) betätigbaren Schalteinrichtung (8) und einem die elektronische Schaltung (6,13) und die Schalteinrichtung (8) aufnehmenden Körper (2), der durch heißlaminierte Kunststoffteile (15) gebildet wird, **dadurch gekennzeichnet, dass** der Datenträger gemäß einem Verfahren nach einem der Ansprüche 1 bis 12 hergestellt worden ist.

## Claims

1. A method for manufacturing a portable data carrier (1) having at least one electronic circuit (6), a switching device (8) actuatable from outside the portable data carrier (1), and a body (2) receiving the electronic circuit (6, 13) and the switching device (8), wherein after the manufacture of the body (2) a cavity (17) for the switching device (8) is recessed in the body (2), and upon the formation of the cavity (17) at least a first electroconductive region (22) connected to the electronic circuit (6) is exposed to which the switching device (8) is attached,
**characterized in that**
the body (2) is produced by hot lamination of plastic parts (15),
the cavity (17) for the switching device (8) is recessed in the body (2) as a two-step cavity,
the at least a first electroconductive region (22) is disposed in the region of a shoulder (18) of the two-step cavity (17),
a second electroconductive region (19, 20; 28) is exposed or formed in the bottom of the two-step cavity, and
the switching device (8) has two switching contacts to be interconnected electrically which are constituted by the second electrical region (19, 20) or touch the second electroconductive region (28) upon actuation of the switching device (8).

2. The method according to claim 1, **characterized in that** the switching device (8) is formed as a mechanical push-button.

3. The method according to either of the preceding claims, **characterized in that** an elastically deformable element (23) is disposed within the cavity (17).

4. The method according to claim 3, **characterized in that** the elastically deformable element (23) is glued into the cavity (17).

5. The method according to any of the preceding claims, **characterized in that** the cavity (17) is closed with a cover (25).

6. The method according to claim 5, **characterized in that** the cover (25) is formed so as to be elastically deformable.

7. The method according to claim 6, **characterized in that** the geometry of the cavity (17) is so chosen that the switching contacts (19, 20) can be interconnected electrically through an elastic deformation of the cover (25).

8. The method according to any of claims 3 to 7, **characterized in that** the elastically deformable element (23) and/or the cover (25) are taken from a plane half-product (29, 31, 33).

9. The method according to any of claims 5 to 8, **characterized in that** the elastically deformable element (23) and the cover (25) are processed in the form of a permanently interconnected unit.

10. The method according to any of the preceding claims, **characterized in that** a multiplicity of cavities (17) are recessed in the body (2).

11. The method according to claim 10, **characterized in that** several cavities (17) are closed by a common cover (25).

12. The method according to any of the preceding claims, **characterized in that** the portable data carrier (1) is equipped with a reset device which is actuatable from outside the portable data carrier (1) and serves to trigger a transfer of the electronic circuit (6, 13) to a defined state.

13. A portable data carrier for storage and/or processing of data, having an electronic circuit (6), a switching device (8) actuatable from outside the portable data carrier (1), and a body (2) receiving the electronic circuit (6, 13) and the switching device (8) and formed by hot-laminated plastic parts (15), **characterized in that** the data carrier has been manufactured by a method according to any of claims 1 to 12.

## Revendications

1. Procédé de fabrication d'un support de données portable (1) qui comporte au moins un circuit électronique (6), un dispositif de commutation (8) actionnable de l'extérieur du support de données portable (1) et un corps (2) accueillant le circuit électronique (6, 13) et le dispositif de commutation (8), une cavité (17) destinée au dispositif de commutation (8) étant, après la fabrication du corps (2), pratiquée dans le corps (2), et, lors de la réalisation de la cavité (17), au moins une première zone électroconductrice (22) étant mise à nu, qui est reliée au circuit électronique (6) et à laquelle est connecté le dispositif de commutation (8),
**caractérisé en ce que**
le corps (2) est fabriqué par lamination à chaud de pièces en matière plastique (15), la cavité (17) destinée au dispositif de commutation (8) est pratiquée dans le corps (2) sous forme de cavité à deux niveaux,
la au moins une première zone électroconductrice (22) est agencée dans la zone d'une épaule (18) de la cavité (17) à deux niveaux,
une deuxième zone électroconductrice (19,20; 28) est mise à nu ou réalisée dans le fond de la cavité à deux niveaux et
le dispositif de commutation (8) comporte deux contacts de commutation à relier électriquement entre eux qui sont constitués par la deuxième zone électrique (19, 20) ou qui, lors de l'actionnement du dispositif de commutation (8), touchent la deuxième zone électroconductrice (28).

2. Procédé selon la revendication 1, **caractérisé en ce que** le dispositif de commutation (8) est réalisé sous forme de palpeur mécanique.

3. Procédé selon une des revendications précédentes, **caractérisé en ce que**, au sein de la cavité (17), un élément (23) élastiquement déformable est agencé.

4. Procédé selon la revendication 3, **caractérisé en ce que** l'élément (23) élastiquement déformable est collé dans la cavité (17).

5. Procédé selon une des revendications précédentes, **caractérisé en ce que** la cavité (17) est fermée par un couvercle (25).

6. Procédé selon la revendication 5, **caractérisé en ce que** le couvercle (25) est élastiquement déformable.

7. Procédé selon la revendication 6, **caractérisé en ce que** la géométrie de la cavité (17) est choisie de telle sorte que les contacts de commutation (19, 20) peuvent être reliés électriquement entre eux par une déformation élastique du couvercle (25).

8. Procédé selon une des revendications de 3 à 7, **caractérisé en ce que** l'élément (23) élastiquement déformable et/ou le couvercle (25) sont prélevés d'un semi-fini (29, 31, 33) laminaire.

9. Procédé selon une des revendications de 5 à 8, **caractérisé en ce que** l'élément (23) élastiquement déformable et le couvercle (25) sont confectionnés sous forme d'une unité les joignant entre eux à demeure.

10. Procédé selon une des revendications précédentes, **caractérisé en ce qu'**une pluralité de cavités (17) est pratiquée dans le corps (2).

11. Procédé selon la revendication 10, **caractérisé en ce que** plusieurs cavités (17) sont fermées par un couvercle (25) commun.

12. Procédé selon une des revendications précédentes, **caractérisé en ce que** le support de données portable (1) est équipé d'un dispositif de remise à l'état initial qui est actionnable de l'extérieur du support de données portable (1) et à l'aide duquel le passage du circuit électronique (6, 13) à un état défini est déclenchable.

13. Support de données portable destiné à la mémorisation et/ou au traitement de données, comprenant un circuit électronique (6), un dispositif de commutation (8) actionnable de l'extérieur du support de données portable (1) et un corps (2) qui accueille le circuit électronique (6, 13) et le dispositif de commutation (8) et qui est constitué par des pièces en matière plastique (15) laminées à chaud, **caractérisé en ce que** le support de données a été fabriqué suivant un procédé selon une des revendications de 1 à 12.
